# EUROPEAN PATENT APPLICATION

(11) **EP 4 576 380 A1**
(43) Date of publication of application: **25.06.2025**
(21) Application number: 24203171.4
(22) Date of filing: 27.09.2024
(51) Int. Cl.: H01M 50/358, H01M 50/507, H01M 50/342, H01M 50/30

(54) **BUSBAR HOLDER AND BATTERY MODULE**

(30) Priority: 12.12.2023 KR 20230179546
(71) Applicant: SAMSUNG SDI CO., LTD., Yongin-si, Gyeonggi-do 17084 (KR)
(72) Inventor: Woo, Beom Jun, Suwon-si, Gyeonggi-do 16678 (KR); Lee, Byung Hyun, Suwon-si, Gyeonggi-do 16678 (KR); Jeon, Sung Hyun, Suwon-si, Gyeonggi-do 16678 (KR); Ji, Tae Ho, Suwon-si, Gyeonggi-do 16678 (KR)
(74) Representative: Gulde & Partner

(57) **Abstract**

The present disclosure relates to a busbar holder (40A, 40B) and a battery module (10). The busbar holder (40A, 40B) includes a holder base (41A, 41B) configured to support a plurality of busbars (27) each busbar (27) of the plurality of busbars (27) electrically connecting a pair of adjacent battery cells (12) among a plurality of battery cells (12), and an insulator (60) which is fixed to the holder base (41A, 41B) and includes a plurality of cell vent covering portions (63) configured to cover a plurality of cell vents (20) provided to face a first direction in the plurality of battery cells (12) and configured to be ruptured when gases are discharged from inside to outside of the plurality of battery cells (12) through the plurality of cell vents (20).

## Description

### BACKGROUND

### 1. Field

The present disclosure relates to a busbar holder and a battery module including the busbar holder according to the invention.

### 2. Discussion of Related Art

In general, as the demand for portable electronic products such as notebook computers, video cameras, and portable phones is rapidly increasing, and the commercialization of robots, electric vehicles, and the like begins in earnest, research on high-performance secondary batteries repeatedly chargeable and dischargeable is being actively conducted.

Secondary batteries are widely used for driving or storing energy not only in small devices such as portable electronic devices, but also in medium and large devices such as electric vehicles and energy storage systems (ESSs). In particular, in the case of medium and large devices, in order to improve battery output power and/or capacity, a plurality of battery cells are electrically connected to each other to constitute a battery module.

Each battery cell may include a cell vent through which high-temperature and high-pressure gases and flammable materials generated internally due to an abnormal phenomenon that occurs during charging or discharging are discharged. Gases and flammable materials discharged from some battery cells can quickly be transmitted and spread to other battery cells arranged in a battery module, which can easily develop into a major fire accident.

The information described in the background of the present disclosure is merely disclosed for helping to understand the background technology of the present disclosure, and therefore it may contain information that does not constitute the related art.

### SUMMARY

The invention is defined by the appended claims. The description that follows is subjected to this limitation. Any disclosure lying outside the scope of said claims is only intended for illustrative as well as comparative purposes.

One or more embodiments include a busbar holder which prevents gases and flammable materials discharged from some battery cells included in a battery module from spreading to other surrounding battery cells, and a battery module including the same.

These and other aspects and characteristics of embodiments according to of the present disclosure will be described in or will be apparent from the following description of some embodiments of the present disclosure.

According to one or more embodiments, the busbar holder includes a holder base configured to support a plurality of busbars each busbar of the plurality of busbars electrically connecting a pair of adjacent battery cells among a plurality of battery cells; and an insulator which is fixed to the holder base and includes a plurality of cell vent covering portions configured to cover a plurality of cell vents provided to face a first direction in the plurality of battery cells, and configured to be ruptured when gases are discharged from inside to outside of the plurality of battery cells through the plurality of cell vents.

The holder base may include an insulating material such as synthetic resin to be insulated from the plurality of battery cells and the plurality of busbars.

The insulator may include a thermal resistance material.

The insulator may include a material of mica, an aerogel, and/or a ceramic.

The insulator may include a material with properties configured for withstanding a temperature of 1,000 °C or more without being deformed for 10 seconds or more.

Each of the plurality of cell vent covering portions may be configured to cover a corresponding one of the plurality of cell vents.

The cell vent covering portions may be configured such that at least one of the cell vent covering portions is ruptured when gases are discharged from inside to outside of at least the corresponding one of the plurality of battery cells through the corresponding one of the plurality of cell vents.

The holder base and the insulator may be joined. In other words, the holder base and the insulator may be connected to each other.

The holder base may include the insulator inserted therein. In other words, the holder base may enclose at least a part of the insulator.

The busbar holder may be molded and includes the holder base with the insulator inserted therein.

The busbar holder may be molded and formed by inserting the insulator into the holder base.A slot passing through the insulator in a thickness direction may be formed in the cell vent covering portion. In other words, the busbar holder may include a slot, which may extend through the insulator along a thickness direction. The slot may extend through the insulator along the first direction.

Each cell vent covering portion of the plurality of cell vent covering portions may include at least one slot passing through the insulator in a thickness direction.

The at least one slot may include a plurality of slots, and the plurality of slots may extend along a plurality of cutting lines intersecting each other. In other words, the slot may be provided as a plurality of slots, and the plurality of slots may extend along a plurality of cutting lines intersecting each other.

The busbar holder may include a dotted line passing through the insulator in a thickness direction and/or a groove in which a thickness of the insulator gradually becomes thinner.

Each cell vent covering portion may include at least one dotted line passing through the insulator in a thickness direction and/or at least one groove in which a thickness of the insulator gradually becomes thinner.

The at least one dotted line passing through the insulator in a thickness direction and/or the at least one groove in which a thickness of the insulator gradually becomes thinner may include a plurality of dotted lines and/or grooves, and the plurality of dotted lines and/or grooves may extend along a plurality of cutting lines intersecting each other.

The plurality of battery cells and the plurality of busbars may be arranged in a second direction intersecting the first direction, the plurality of cell vent covering portions may be arranged in the second direction so as to be spaced apart from the plurality of busbars, and the holder base may include a blocking wall extending in the second direction between the plurality of cell vent covering portions and the plurality of busbars and the blocking wall protruding away from the plurality of battery cells.

The holder base may further include a pair of corresponding blocking walls.

The insulator may further include an insulating, preferably a thermal insulating, plate portion connected to the plurality of cell vent covering portions, and a blocking wall insertion portion that is bent and protrudes from the insulating plate portion away from the plurality of battery cells, optionally to be inserted into the blocking wall. The blocking wall may include the blocking wall insertion portion inserted therein. In other words, the blocking wall base may enclose at least a part of the blocking wall insertion portion.

The plurality of battery cells may be arranged in a second direction intersecting the first direction, and the busbar holder may further include a plurality of separation partition walls, each of the plurality of separation partition walls protruding to be interposed between a pair of adjacent battery cells among the plurality of battery cells.

One or more embodiments includes a battery module with a plurality of battery cells, a plurality of busbars and a busbar holder which prevents gases and flammable materials discharged from some battery cells included in a battery module from spreading to other surrounding battery cells, and a battery module including the same.

According to one or more embodiments a battery module includes a plurality of battery cells each of the plurality of battery cells including a cell vent provided to face a first direction, resulting in a plurality of cell vents, a plurality of busbars, each of the plurality of busbars electrically connecting a pair of adjacent battery cells among the plurality of battery cells, and a busbar holder including a holder base supporting the plurality of busbars, and including an insulator which is fixed to the holder base, wherein the insulator includes a plurality of cell vent covering portions configured to cover the plurality of cell vents and be ruptured when gases are discharged from inside to outside of the plurality of battery cells through the plurality of cell vents.

The holder base may include an insulating material such as synthetic resin to be insulated from the plurality of battery cells and the plurality of busbars.

The insulator may include a thermal resistance material.

The insulator may include a material of mica, an aerogel, and/or a ceramic.

The insulator may include a material with properties configured for withstanding a temperature of 1,000 °C or more without being deformed for 10 seconds or more.

Each of the plurality of cell vent covering portions may be configured to cover a corresponding one of the plurality of cell vents.

The cell vent covering portions may be configured such that at least one of the cell vent covering portions is ruptured when gases are discharged from inside to outside of at least the corresponding one of the plurality of battery cells through the corresponding one of the plurality of cell vents.

The holder base and the insulator may be joined. In other words, the holder base and the insulator may be connected to each other.

The holder base may include the insulator inserted therein. In other words, the holder base may enclose at least a part of the insulator. The busbar holder may be molded and includes the holder base with the insulator inserted therein.

The busbar holder may be molded and formed by inserting the insulator into the holder base.

A slot passing through the insulator in a thickness direction may be formed in the cell vent covering portion. In other words, the busbar holder may include a slot, which may extend through the insulator along a thickness direction. The slot may extend through the insulator along the first direction.

Each cell vent covering portion of the plurality of cell vent covering portions may include at least one slot passing through the insulator in a thickness direction.

The at least one slot may include a plurality of slots, and the plurality of slots may extend along a plurality of cutting lines intersecting each other. In other words, the slot may be provided as a plurality of slots, and the plurality of slots may extend along a plurality of cutting lines intersecting each other.

The busbar holder may include a dotted line passing through the insulator in a thickness direction and/or a groove in which a thickness of the insulator gradually becomes thinner.

Each cell vent covering portion may include at least one dotted line passing through the insulator in a thickness direction and/or at least one groove in which a thickness of the insulator gradually becomes thinner.

The at least one dotted line passing through the insulator in a thickness direction and/or the at least one groove in which a thickness of the insulator gradually becomes thinner may include a plurality of dotted lines and/or grooves, and the plurality of dotted lines and/or grooves may extend along a plurality of cutting lines intersecting each other.

The plurality of battery cells and the plurality of busbars may be arranged in a second direction intersecting the first direction, the plurality of cell vent covering portions may be arranged in the second direction so as to be spaced apart from the plurality of busbars, and the holder base may include a blocking wall extending in the second direction between the plurality of cell vent covering portions and the plurality of busbars and the blocking wall protruding away from the plurality of battery cells.

The holder base may further include a pair of corresponding blocking walls.

The insulator may further include an insulating plate portion connected to the plurality of cell vent covering portion, and a blocking wall insertion portion that is bent and protrudes from the insulating plate portion away from the plurality of battery cells, optionally to be inserted into the blocking wall. The blocking wall may include the blocking wall insertion portion inserted therein. In other words, the blocking wall base may enclose at least a part of the blocking wall insertion portion.

A side surface of the insulating plate portion may be exposed to face the plurality of battery cells. In other words, the side surface may face the plurality of battery cells.

The plurality of battery cells may be arranged in a second direction intersecting the first direction, and the busbar holder may further include a plurality of separation partition walls, each of the plurality of separation partition walls protruding to be interposed between a pair of adjacent battery cells among the plurality of battery cells.

The battery module may further include an adhesive layer disposed between the busbar holder and the plurality of battery cells such that the busbar holder is attached to the plurality of battery cells.

The battery module may further include a pair of side plates which are in contact with the plurality of battery cells such that the plurality of battery cells are interposed therebetween and to which the busbar holder is coupled.

The battery module may further include a module cover configured to cover the busbar holder such that the plurality of busbars is covered at the top, and which may be coupled to the busbar holder.

Ends of the pair of blocking walls in the first direction may be in contact with a bottom surface of the module cover facing the plurality of battery cells. A chamber in which gases and flammable materials discharged from the plurality of cell vents are accommodated may be formed by the module cover and the pair of blocking walls spaced apart from each other such that the plurality of cell vent covering portions are disposed therebetween. Gases and flame materials discharged due to the rupture of one cell vent covering portion of the plurality of cell vent covering portions may be blocked by the pair of blocking walls and accommodated in the above-described chamber without moving to the busbar and the cell terminal, thereby suppressing the propagation of fire.

According to one or more embodiments, gases and flammable materials discharged due to the occurrence of an abnormal phenomenon in some battery cells included in a battery module are blocked by an insulator and do not spread to other surrounding battery cells. Therefore, the propagation and spread of fire and explosions in the battery module are delayed, thereby reducing damage to life and property.

According to one or more embodiments, when an abnormal phenomenon occurs in some battery cells included in a battery module and gases and flammable materials are discharged, a cell vent covering portion facing a cell vent through which gases are discharged is ruptured to allow the gases and flammable materials to be discharged smoothly, and a cell vent covering portion facing a cell vent of another battery cell in which an abnormal phenomenon does not occur is not ruptured. Therefore, the propagation of fire to other battery cells due to high-temperature gases and flammable materials is suppressed.

However, the effects obtainable by the present disclosure are not limited to the above-mentioned effects, and other technical effects not mentioned will be clearly understood by those skilled in the art from the following description of the present disclosure.

### BRIEF DESCRIPTION OF THE DRAWINGS

The accompanying drawings in the present specification show embodiments of the present disclosure, and are illustrated to help further understand the technical concept, aspects and features of the present disclosure together with the detailed description of the present disclosure. Therefore, the present disclosure shall not be interpreted as being defined only by the aspects illustrated in the drawings:
FIG. 1 is a perspective view schematically illustrating a battery module according to embodiments of the present disclosure;
FIG. 2 is a top exploded perspective view schematically illustrating the battery module according to embodiments of the present disclosure;
FIG. 3 is a bottom exploded perspective view schematically illustrating the battery module according to embodiments of the present disclosure;
FIG. 4 is a side view schematically illustrating a plurality of battery cells, a busbar holder, and a plurality of busbars extracted from the exploded perspective view of FIG. 2;
FIG. 5 is a cross-sectional view along a line A-A in FIG. 1;
FIG. 6 is a top perspective view schematically illustrating a busbar holder according to first embodiments of the present disclosure;
FIG. 7 is a bottom perspective view schematically illustrating the busbar holder according to the first embodiments of the present disclosure;
FIG. 8 is a cross-sectional view along a line B-B in FIG. 6;
FIG. 9 is a perspective view schematically illustrating an insulator of FIG. 8;
FIG. 10 is a plan view schematically illustrating a busbar holder according to second embodiments of the present disclosure;
FIG. 11 is a bottom view schematically illustrating the busbar holder according to the second embodiments of the present disclosure; and
FIG. 12 is a cross-sectional view along a line C-C in FIG. 10.

### DETAILED DESCRIPTION OF EXEMPLARY EMBODIMENTS

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items. Expressions such as "at least one of," if preceding a list of elements, modify the entire list of elements and do not modify the individual elements of the list.

Hereinafter, embodiments of the present disclosure will be described, in further detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

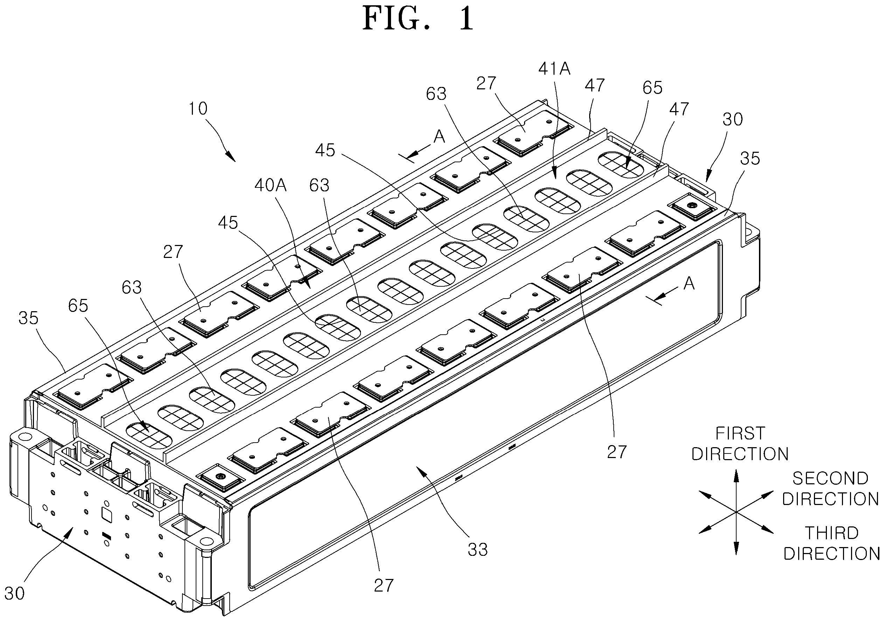

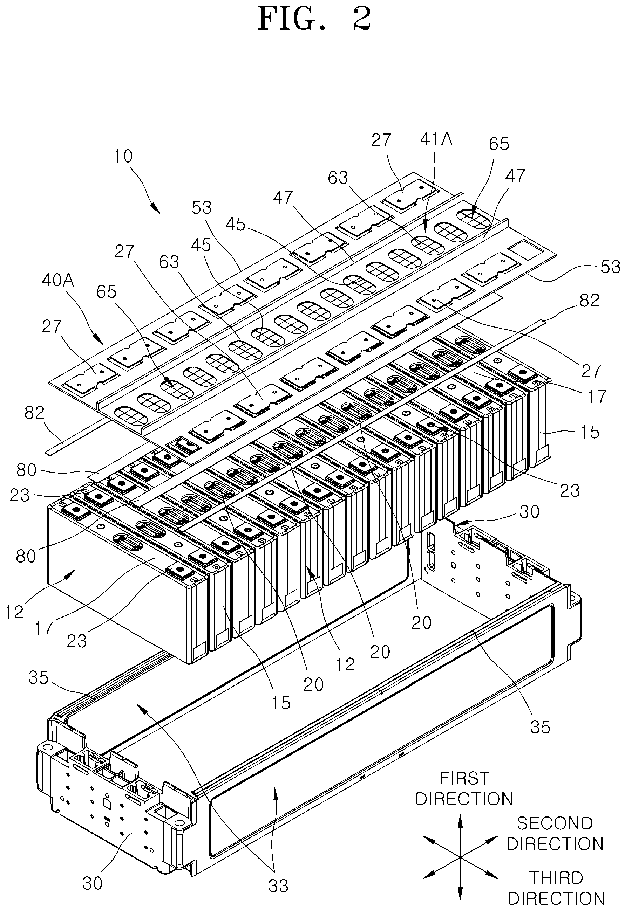

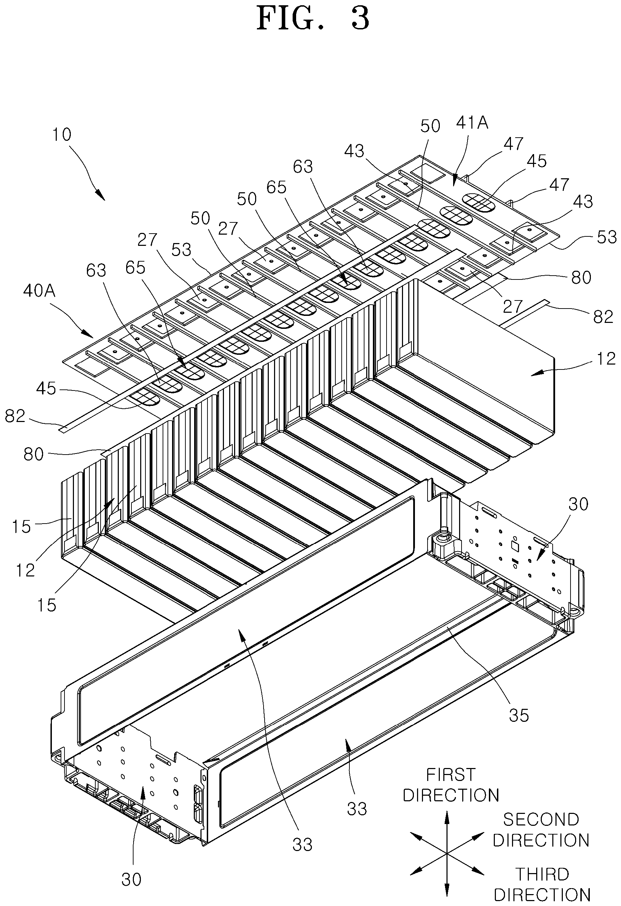

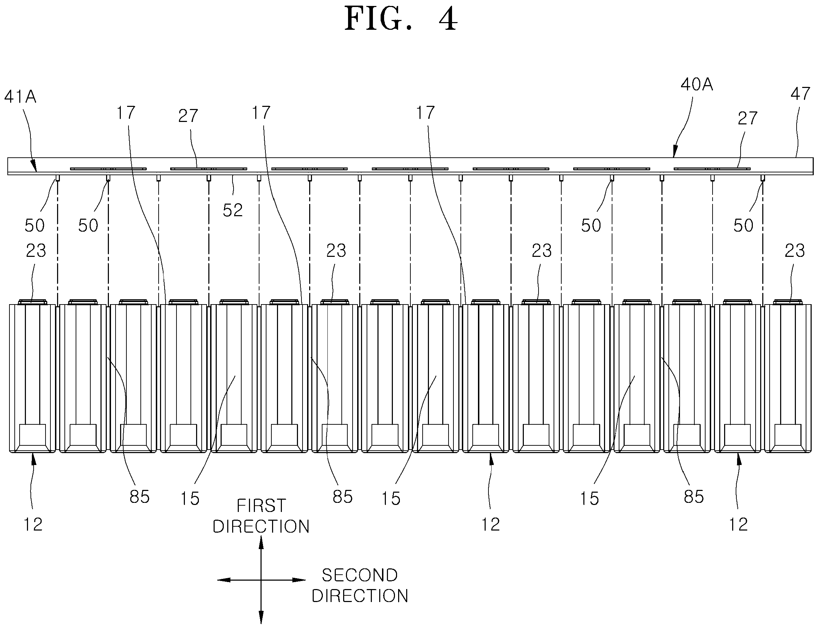

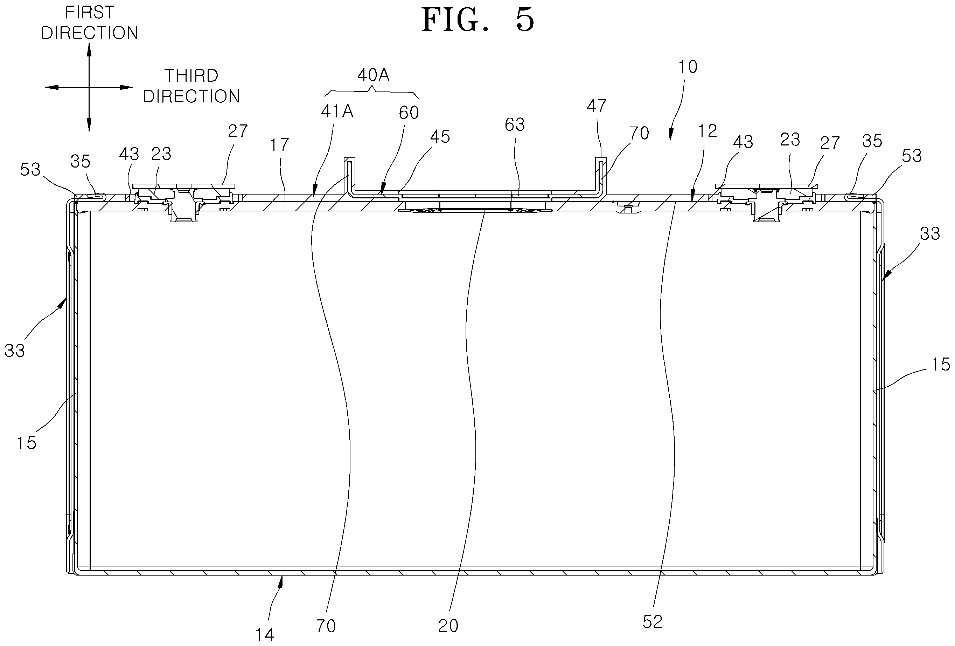

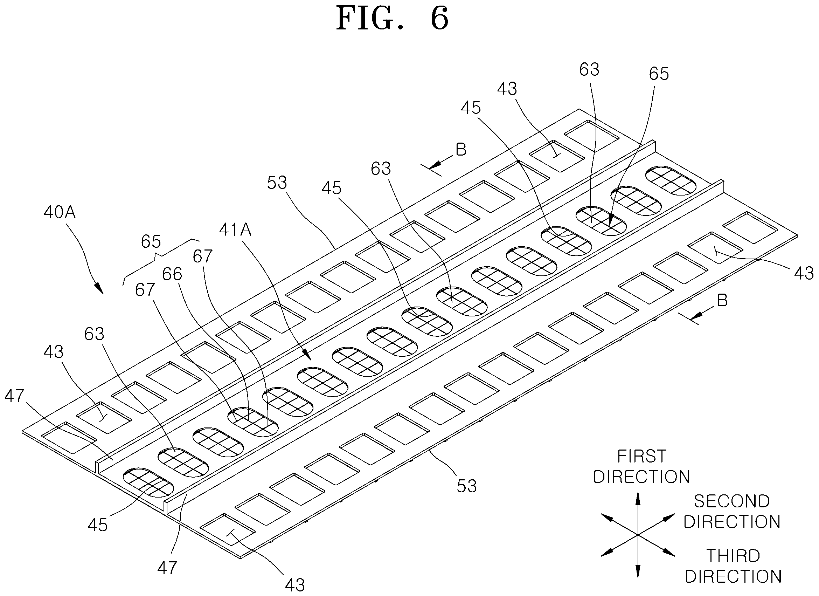

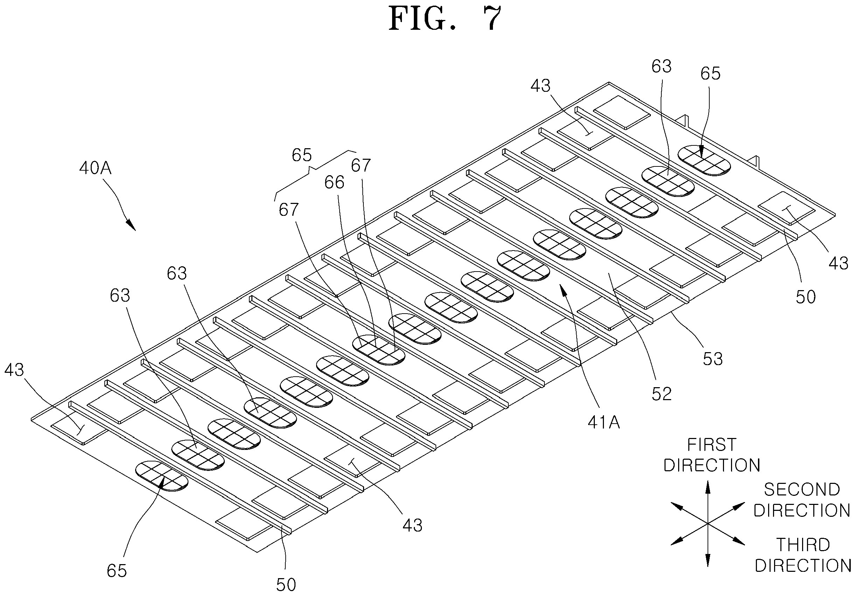

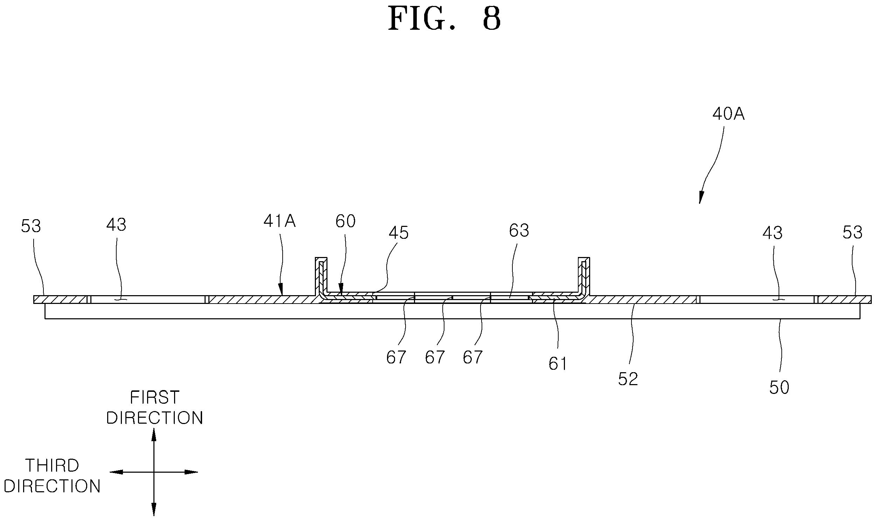

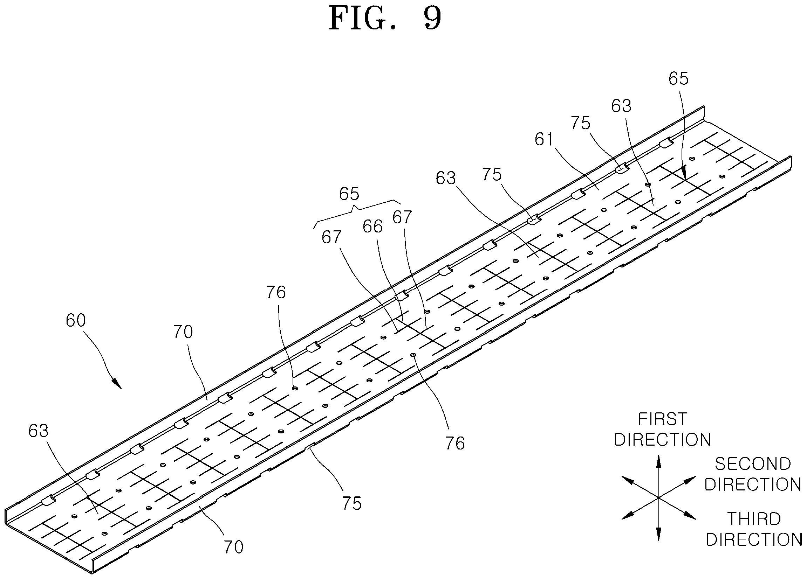

FIG. 1 is a perspective view schematically illustrating a battery module according to embodiments of the present disclosure. FIG. 2 is a top exploded perspective view schematically illustrating the battery module according to embodiments of the present disclosure. FIG. 3 is a bottom exploded perspective view schematically illustrating the battery module according to embodiments. FIG. 4 is a side view schematically illustrating a plurality of battery cells, a busbar holder, and a plurality of busbars extracted from the exploded perspective view of FIG. 2. FIG. 5 is a cross-sectional view along line A-A in FIG. 1. FIG. 6 is a top perspective view schematically illustrating a busbar holder according to first embodiments of the present disclosure. FIG. 7 is a bottom perspective view schematically illustrating the busbar holder according to the first embodiments of the present disclosure. FIG. 8 is a cross-sectional view along line B-B in FIG. 6. FIG. 9 is a perspective view schematically illustrating an insulator of FIG. 8.

Referring to FIGS. 1 to 8, a battery module 10 according to embodiments of the present disclosure includes a plurality of battery cells 12, a plurality of busbars 27, and a busbar holder 40A according to first embodiments of the present disclosure. Each of the plurality of battery cells 12 includes a cell vent 20. Each battery cell 12 may further include a cell case 14, a pair of cell terminals 23, and an electrode assembly (not shown).

The electrode assembly may be accommodated inside the cell case 14. The electrode assembly may be formed by winding or stacking a stack of a first electrode plate, a separator, and a second electrode plate, wherein the stack is formed in a thin plate shape or a film shape.

When the electrode assembly is a wound stack, a winding axis may be parallel to a longitudinal direction of the cell case 14. In addition, the electrode assembly may be a stack type rather than a wound type, and the shape of the electrode assembly is not limited in the present disclosure. In addition, the electrode assembly may be a Z-stack electrode assembly in which a positive electrode plate and a negative electrode plate are inserted into both sides of a separator bent into a Z-stack. In addition, one or more electrode assemblies may be stacked such that long side surfaces thereof are adjacent to each other and may be accommodated inside a case, and the number of electrode assemblies is not limited in the present disclosure. The first electrode plate of the electrode assembly may serve as a negative electrode, and the second electrode plate may serve as a positive electrode. Of course, the reverse is also possible.

The first electrode plate may be formed by applying a first electrode active material such as graphite or carbon on a first electrode current collector plate made of a metal foil of copper, a copper alloy, nickel, a nickel alloy, or the like and may include a first electrode tab (or a first uncoated portion) that is an area on which the first electrode active material is not applied. The first electrode tab may serve as a path for current flow between the first electrode plate and a first current collector. In some embodiments, when the first electrode plate is manufactured, the first electrode tab may be formed by being cut in advance to protrude to one side. The first electrode tab may protrude to one side further than the separator without separate cutting.

The second electrode plate may be formed by applying a second electrode active material such as a transition metal oxide on a second electrode current collector plate made of a metal foil of aluminum or an aluminum alloy and may include a second electrode tab (or a second uncoated portion) that is an area on which the second electrode active material is not applied. The second electrode tab may serve as a path for current flow between the second electrode plate and a second current collector. In some embodiments, when the second electrode plate is manufactured, the second electrode tab may be formed by being cut in advance to protrude to the other side. The second electrode tab may protrude to the other side further than the separator without separate cutting.

In some embodiments, the first electrode tab may be positioned on a side surface of a left end portion of the electrode assembly, and the second electrode tab may be positioned on a side surface of a right end portion of the electrode assembly. Alternatively, the first electrode tab and the second electrode tab may be positioned on one surface in the same direction. Here, the left side and the right side are for convenience of description, and the position of the battery cell 12 may be changed when the battery cell 12 rotates laterally or vertically.

Each of the first electrode tab of the first electrode plate and the second electrode tab of the second electrode plate is positioned at one of both end portions of the electrode assembly as described above. In some embodiments, the electrode assembly may be accommodated in a case along with an electrolyte. In addition, in the electrode assembly, the first current collector and the second current collector may be positioned to be respectively welded and connected to the first electrode tab of the first electrode plate and the second electrode tab of the second electrode plate which are exposed at both sides.

The cell case 14 may have an approximately rectangular parallelepiped shape and may accommodate the electrode assembly and the electrolyte therein. The cell case 14 may include a metal can of which one side is open and a cap plate which closes the one open side of the metal can. A pair of cell terminals 23 may be installed on the cap plate to protrude outward from the cap plate.

One cell terminal 23 of the pair of cell terminals 23 may be electrically connected to one of the first and second current collectors, and the other cell terminal 23 may be electrically connected to the other current collector of the first and second current collectors. Accordingly, the one cell terminal 23 of the pair of cell terminals 23 may become a positive electrode terminal, and the other cell terminal 23 may become a negative electrode terminal.

The pair of cell terminals 23 may be positioned at both end portions of the cap plate in a longitudinal direction, and the cell vent 20 may be positioned between the pair of cell terminals 23 in the cap plate. When high-temperature gases or flammable materials are generated inside the cell case 14 due to overcharging or abnormal operations, the cell vent 20 is ruptured to discharge emissions such as gases or flammable materials from inside to outside of the cell case 14.

The battery cell 12 may be a prismatic battery cell in which the pair of cell terminals 23 protrude from an outer surface 17 of the cap plate in which the cell vent 20 is formed. Hereinafter, the outer surface 17 of the cap plate will be referred to as a cell vent side surface 17. A plurality of cell vents 20 may be provided in the cell case 14 to face a first direction.

The plurality of battery cells 12 may be arranged in one line in a second direction. Accordingly, the plurality of cell vents 20 may be arranged in one line in the second direction. Each cell case 14 may include a pair of cell side surfaces 15 at both sides in a third direction. The second direction may be a direction orthogonal to the first direction, and the third direction may be a direction orthogonal to the first and second directions. For example, the first direction may be an up-down direction, the second direction may be a front-rear direction, and the third direction may be a left-right direction.

Each of the plurality of busbars 27 electrically connects a pair of adjacent battery cells 12 among the plurality of battery cells 12. Each busbar 27 may extend in a direction parallel to the second direction. Each busbar 27 may be in contact with a positive electrode cell terminal 23 of one battery cell 12 of the pair of adjacent battery cells 12 in the second direction and may be in contact with a negative electrode cell terminal 23 of the other battery cell 12 of the pair of adjacent battery cells 12 to electrically connect the positive electrode cell terminal 23 and the negative electrode cell terminal 23 of the respective battery cells 12 of the pair of adjacent battery cells 12.

The plurality of busbars 27 may be arranged to extend in the second direction and may be arranged in two lines along two imaginary lines spaced apart from each other. The plurality of cell vents 20 arranged in one line may be disposed between the plurality of busbars 27 arranged in two lines.

The battery module 10 may further include a pair of end frames 30 and a pair of side plates 33. One end frame 30 of the pair of end frames 30 may be disposed in front of the plurality of battery cells 12 to cover a front surface of the battery cell 12 positioned in the forefront among the plurality of battery cells 12 arranged in the second direction.

The other end frame 30 of the pair of end frames 30 may be disposed behind the plurality of battery cells 12 to cover a rear surface of the battery cell 12 positioned rearmost among the plurality of battery cells 12 arranged in the second direction.

The pair of side plates 33 each cover one of the pair of cell side surfaces 15 of the plurality of battery cells 12 and may each be disposed to face one of the cell side surfaces 15 and be in close contact therewith. Front and rear end portions of each of the pair of side plates 33 may be joined to both end portions of the pair of end frames 30 in the third direction through, for example, a method such as a welding method or a method of applying an adhesive.

The busbar holder 40A includes a holder base 41A and an insulator 60. The holder base 41A supports the plurality of busbars 27. A plurality of vent through-holes 45 are formed in the holder base 41A. The number of the plurality of vent through-holes 45 may correspond one-to-one to the number of the plurality of cell vents 20 of the plurality of battery cells 12. The plurality of vent through-holes 45 and the plurality of cell vents 20 may be disposed to be aligned in the first direction to form a joint opening.

A plurality of terminal through-holes 43 may be formed in the holder base 41A. The number of the plurality of terminal through-holes 43 may correspond one-to-one to the number of the plurality of cell terminals 23 of the plurality of battery cells 12. The plurality of terminal through-holes 43 and the plurality of cell terminals 23 may be disposed to be aligned in the first direction to form a joint opening.

While supported on the holder base 41A, the busbar 27 may be joined to the cell terminal 23 exposed through the terminal through-hole 43. The holder base 41A may be made of, for example, an insulating material such as synthetic resin to be insulated from the battery cell 12 and the busbar 27.

The insulator 60 includes a plurality of cell vent covering portions 63. The plurality of cell vent covering portions 63 cover the plurality of cell vents 20. The number of the plurality of cell vent covering portions 63 may correspond one-to-one to the number of the plurality of cell vents 20. The plurality of cell vent covering portions 63, the plurality of vent through-holes 45, and the plurality of cell vents 20 may be disposed to be aligned in the first direction.

When an abnormal phenomenon occurs inside the battery cell 12 and gases are discharged from the battery cell 12 to the outside through the cell vent 20, the cell vent covering portion 63 corresponding to the cell vent 20 is ruptured due to the pressure of the gases. Accordingly, high-temperature and high-pressure gases and flammable materials generated inside the battery cell 12 may be discharged through the ruptured cell vent covering portion 63 and the vent through-hole 45 without obstruction in the first direction, that is, to an upper side of the busbar holder 40A.

The insulator 60 is made of a material with excellent thermal resistance. For example, the insulator 60 may be made of one material of mica, an aerogel, and a ceramic. The insulator 60 may have properties of withstanding a temperature of 1,000 °C or more without being deformed for 10 seconds or more.

The insulator 60 may further include a flat insulating plate portion 61 connected to the plurality of cell vent covering portions 63. A slot 65 passing through the insulator 60 in a thickness direction may be formed in the cell vent covering portion 63 such that the cell vent covering portion 63 may be easily ruptured by the pressure of gases discharged from the cell vent 20.

A plurality of slots 65 may be provided. As shown in FIGS. 6, 7, and 9, the plurality of slots may include, for example, a first slot 66 extending along a first cutting line and three second slots 67 extending along a second cutting line intersecting the first cutting line. The first cutting line may be an imaginary line extending in the third direction, and the second cutting line may be an imaginary line extending in the second direction. The three second slots 67 may be disposed to be spaced apart from each other.

Meanwhile, instead of the slot 65, a dotted line passing through the insulator 60 in the thickness direction or a groove in which a thickness of the insulator 60 gradually becomes thinner may be formed in the cell vent covering portion 63.

The insulator 60 is fixed to the holder base 41A. As shown in FIG. 8, for example, the busbar holder 40A may be molded and formed by inserting the insulator 60 into the holder base 41A. In other words, in a state in which the insulator 60 is fixed inside a mold (not shown) for forming the holder base 41A, a synthetic resin may be injected into the mold and cured to form the busbar holder 40A.

A plurality of mold fixing through-holes 75 and 76 may be formed in the insulator 60 such that the insulator 60 may be fixed inside the above-described mold. Through-holes (not shown) corresponding to the mold fixing through-holes 75 and 76 of the insulator 60 may also be formed in a surface of the holder base 41A which is formed by injecting the synthetic resin into the mold and curing the synthetic resin.

In the case of a busbar holder 40A according to other embodiments of the present disclosure, a holder base 41A and an insulator 60 may be joined by applying an adhesive rather than by insertion injection molding.

The holder base 41A may further include a pair of blocking walls 47 extending in the second direction between the plurality of cell vent covering portions 63 and the plurality of busbars 27 and protruding away from the plurality of battery cells 12. Specifically, for example, the blocking walls 47 may be formed between the plurality of cell vent covering portions 63 extending in one line and the plurality of terminal through-holes 43 extending in one line and between the plurality of cell vent covering portions 63 extending in one line and the plurality of terminal through-holes 43 extending in another line. In other words, one blocking wall 47 of the pair of blocking walls 47 may extend in the second direction between one of the pair of plurality of cell vent cover portions 63 and one of the pair of plurality of busbars 27, and the other blocking wall 47 of the pair of blocking walls 47 may extend in the second direction between the other one of the pair of plurality of cell vent cover portions 63 and the other one of the pair of plurality of busbars 27.

Although not shown in the drawings, the battery module 10 may further include a module cover (not shown) which covers the busbar holder 40A such that the plurality of busbars 27 are not exposed upward and is coupled to the busbar holder 40A. Ends of the pair of blocking walls 47 in the first direction may be in close contact with a bottom surface of the module cover.

A chamber in which gases and flammable materials discharged from the cell vent 20 are accommodated may be formed by the module cover and the pair of blocking walls 47 spaced apart from each other such that the plurality of cell vent covering portions 63 are disposed therebetween. Gases and flame materials discharged due to the rupture of one cell vent covering portion 63 of the plurality of cell vent covering portions 63 may be blocked by the pair of blocking walls 47 and accommodated in the above-described chamber without moving to the busbar 27 and the cell terminal 23, thereby suppressing the propagation of fire.

The insulator 60 may further include a pair of blocking wall insertion portions 70 that are bent and extend from the insulating plate portion 61 away from the plurality of battery cells 12 to be inserted into the pair of blocking walls 47. The pair of blocking wall insertion portions 70 may protrude in the first direction from both ends of the insulating plate portion 61 in the third direction.

Since the pair of blocking wall insertion portions 70 are inserted into the pair of blocking walls 47, the rigidity of the pair of blocking walls 47 can be improved. In addition, even when the blocking walls 47 made of a synthetic resin are deformed or melted by high-temperature gases and flammable materials, the blocking wall insertion portions 70 can withstand the high-temperature gases and flammable materials without being deformed so that the propagation of fire can be suppressed and delayed.

The busbar holder 40A may further include a plurality of separation partition walls 50 which each protrude to be interposed between a pair of adjacent battery cells 12 among the plurality of battery cells 12. Specifically, the plurality of separation partition walls 50 may protrude from a bottom surface 52 of the holder base 41A. The separation partition walls 50 may protrude in a direction opposite to a direction in which the blocking walls 47 or the blocking wall insertion portions 70 protrude.

Each of the plurality of separation partition walls 50 may extend in the third direction. A pair of adjacent separation partition walls 50 may be spaced apart from each other at an interval equal to a width of the cell case 14 in the second direction. Due to the separation partition walls 50, gases and flammable materials discharged from the cell vent 20 may not flow back toward the cell case 14. Accordingly, the propagation of fire can be further delayed and suppressed.

The battery module 10 may further include a plurality of insulating papers 85 each interposed between a pair of adjacent cell cases 14 of the plurality of battery cells 12. The insulating papers 85 may be partially superimposed or overlapping or in contact with the separation partition walls 50. Accordingly, the propagation of fire can be further delayed and suppressed.

The battery module 10 may further include adhesive layers 80 and 82 interposed between the busbar holder 40A and the plurality of battery cells 12 such that the busbar holder 40A is attached to the plurality of battery cells 12. The adhesive layers 80 and 82 may be formed by applying an adhesive or attaching double-sided adhesive tape.

A pair of first adhesive layers 80 may be formed to extend in the second direction between the cell vent 20 and the cell terminal 23 on the cell vent side surface 17. The pair of first adhesive layers 80 may be formed to be spaced apart from each other with the cell vent 20 interposed therebetween. One side surface of each of the pair of first adhesive layers 80 may be attached to the cell vent side surfaces 17 of the plurality of battery cells 12, and the other side surface of each of the pair of first adhesive layers 80 may be attached to the bottom surface 52 of the holder base 41A.

The cell vent side surface 17 around the cell vent 20 and the bottom surface 52 of the busbar holder 40A may be firmly fixed by the pair of first adhesive layers 80. Since a gap through which a fluid may flow disappears between the cell vent side surface 17 and the bottom surface of the busbar holder 40A, gases and flammable materials discharged from the cell vent 20 cannot flow back toward the cell case 14.

A pair of second adhesive layers 82 may be formed to extend in the second direction on the cell vent side surface 17 outside a pair of cell terminals 23 spaced apart from each other in the third direction. One side surface of each of the pair of second adhesive layers 82 may be attached to the cell vent side surfaces 17 of the plurality of battery cells 12, and the other side surface of each of the pair of second adhesive layers 82 may be attached to the bottom surface 52 of the holder base 41A.

The busbar holder 40A may be firmly fixed to the pair of side plates 33. Specifically, for example, the pair of side plates 33 may include an upper coupling portion 35, which is bent toward the cell terminal 23, at an upper end portion. Both end portions of the busbar holder 40A in the third direction may be pressed by a pair of upper coupling portions 35 in a direction in which the upper coupling portions 35 come into close contact with the cell vent side surface 17.

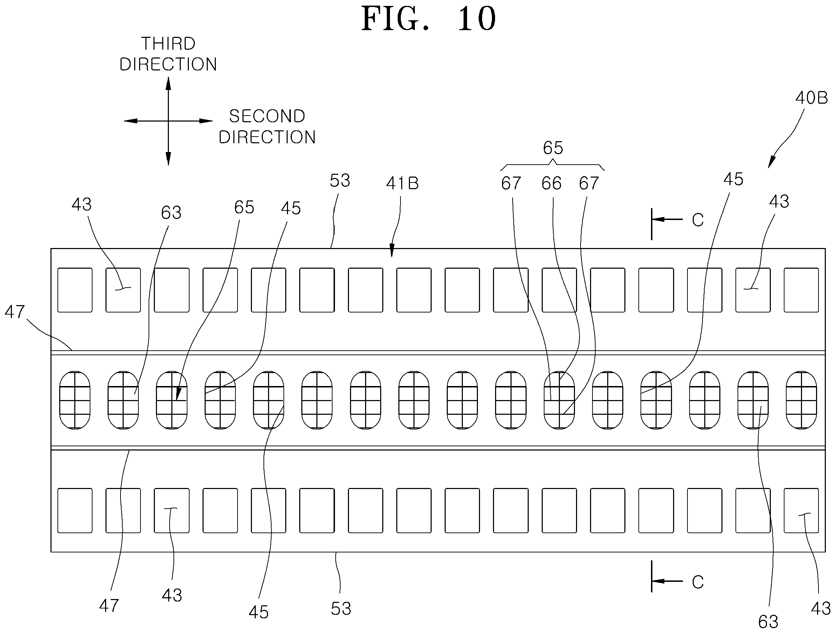

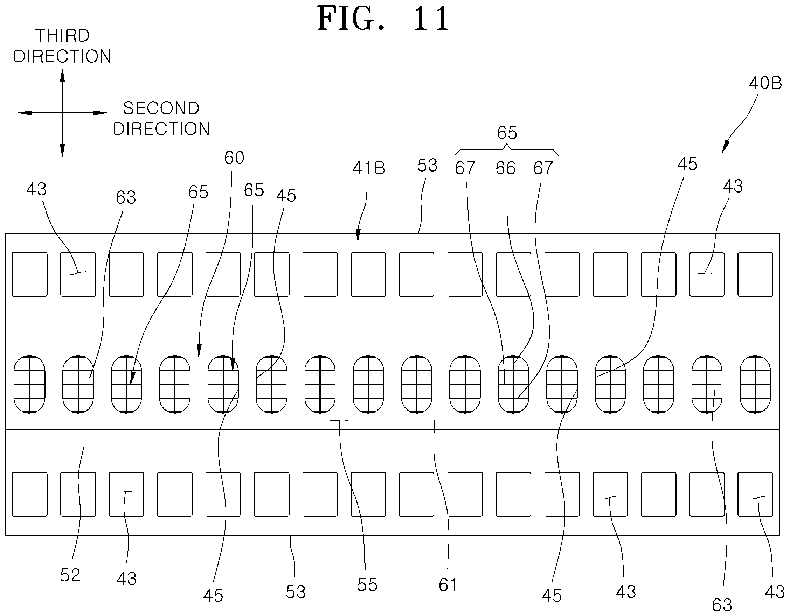

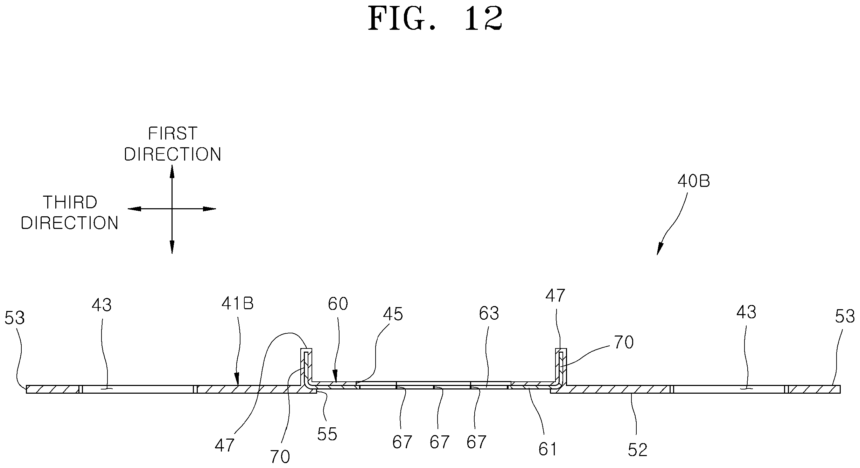

FIG. 10 is a plan view schematically illustrating a busbar holder according to second embodiments of the present disclosure. FIG. 11 is a bottom view schematically illustrating the busbar holder according to the second embodiments of the present disclosure. FIG. 12 is a cross-sectional view along a line C-C in FIG. 10. Referring to FIGS. 1 to 3 and 10 to 12, a busbar holder 40B according to the second embodiments of the present disclosure may be installed in the battery module 10 shown in FIGS. 1 to 3 instead of the busbar holder 40A according to the first embodiments of the present disclosure.

The busbar holder 40B according to the second embodiments of the present disclosure includes a holder base 41B and an insulator 60 like the busbar holder 40A according to the first embodiments of the present disclosure, and the holder base 41B includes a plurality of terminal through-holes 43, a plurality of vent through-holes 45, two end portions 53, and a pair of blocking walls 47.

The insulator 60, the plurality of terminal through-holes 43, the plurality of vent through-holes 45, the two end portions 53, and the pair of blocking walls 47 are indicated by the same reference numerals and have the same characteristics as the insulator 60, the plurality of terminal through-holes 43, the plurality of vent through-holes 45, the two end portions 53, and the pair of blocking walls 47 included in the busbar holder 40A according to the first embodiments of the present disclosure, and thus redundant description will be omitted.

A side surface of an insulating plate portion 61 of the insulator 60 facing a plurality of battery cells 12, that is, a bottom surface, may be exposed to face the plurality of battery cells 12. An insulator exposure window 55 from which a synthetic resin is removed may be formed on a bottom surface 52 of the holder base 41B such that the bottom surface of the insulating plate portion 61 is exposed to face the plurality of battery cells 12.

Due to such a configuration, when high-temperature gases and flammable materials are discharged through a cell vent 20, since the high-temperature gases and flammable materials are discharged through a ruptured cell vent covering portion 63 immediately after coming into direct contact with the insulating plate portion 61 and a cell vent covering portion 63 which have excellent thermal resistance, a bottom surface of the holder base 41B may not be deformed or melted.

According to embodiments of the present disclosure, gases and flammable materials discharged due to the occurrence of an abnormal phenomenon in some battery cells included in a battery module are blocked by an insulator and do not spread to other surrounding battery cells. Therefore, the propagation and spread of fire and explosions in the battery module are delayed, thereby reducing damage to life and property.

According to embodiments of the present disclosure, when an abnormal phenomenon occurs in some battery cells included in a battery module and gases and flammable materials are discharged, a cell vent covering portion facing a cell vent through which gases are discharged is ruptured to allow the gases and flammable materials to be discharged smoothly, and a cell vent covering portion facing a cell vent of another battery cell in which an abnormal phenomenon does not occur is not ruptured. Therefore, the propagation of fire to other battery cells due to high-temperature gases and flammable materials is suppressed.

However, the effects that can be achieved through the present disclosure are not limited to the above-mentioned effects, and other technical effects that are not mentioned will be clearly understood by those skilled in the art from the description of the invention described below.

While aspects of some embodiments of the present disclosure has have been described with reference to embodiments shown in the drawings, these embodiments are merely illustrative and it should be understood that various modifications and equivalent other embodiments can be derived by those skilled in the art on the basis of the embodiments.

Therefore, the technical scope of the present disclosure should be defined by the appended claims, and their equivalents.

## Claims

1. A busbar holder (40A, 40B) comprising:
a holder base (41A, 41B) configured to support a plurality of busbars (27), each busbar (27) of the plurality of busbars (27) electrically connecting a pair of adjacent battery cells (12) among a plurality of battery cells (12); and
an insulator (60) which is fixed to the holder base (41A, 41B) and includes a plurality of cell vent covering portions (63, configured to cover a plurality of cell vents (20) provided to face a first direction in the plurality of battery cells (12) and configured to be ruptured when gases are discharged from inside to outside of the plurality of battery cells (12) through the plurality of cell vents (20).

2. The busbar holder (40A, 40B) as claimed in claim 1, wherein the busbar holder (40A, 40B) is molded and formed by inserting the insulator (60) into the holder base (41A, 41B).

3. The busbar holder (40A, 40B) as claimed in claims 1 or 2, wherein a slot (65, 66, 67) passing through the insulator (60) in a thickness direction is formed in the cell vent covering portion (63).

4. The busbar holder (40A, 40B) as claimed in any of claims 1 to 3, wherein the plurality of battery cells (12) and the plurality of busbars (27) are arranged in a second direction intersecting the first direction,
the plurality of cell vent covering portions (63) are arranged in the second direction so as to be spaced apart from the plurality of busbars (27), and
the holder base (41A, 41B) includes a blocking wall (47) extending in the second direction between the plurality of cell vent covering portions (63) and the plurality of busbars (27) and the blocking wall (47) protruding away from the plurality of battery cells (12).

5. The busbar holder (40A, 40B) as claimed in any of claims 1 to 4, wherein the insulator (60) further includes an insulating plate portion (61) connected to the plurality of cell vent covering portions (63), and a blocking wall insertion portion (70) that is bent and protrudes from the insulating plate portion (61) away from the plurality of battery cells (12), optionally to be inserted into the blocking wall (47).

6. The busbar holder (40A, 40B) as claimed in any of claims 1 to 5, wherein the plurality of battery cells (12) are arranged in a second direction intersecting the first direction, and wherein
the busbar holder (40A, 40B) further includes a plurality of separation partition walls (50), each of the plurality of separation partition walls (50) protruding to be interposed between a pair of adjacent battery cells (12) among the plurality of battery cells (12).

7. A battery module (10) comprising:
a plurality of battery cells (12) each of the plurality of battery cells (12) including a cell vent (20) provided to face a first direction;
a plurality of busbars (27), each of the plurality of busbars (27) electrically connecting a pair of adjacent battery cells (12) among the plurality of battery cells (12); and
a busbar holder (40A, 40B) including a holder base (41A, 41B) supporting the plurality of busbars (27), and including an insulator (60) which is fixed to the holder base (41A, 41B) and wherein the insulator (60) includes a plurality of cell vent covering portions (63) configured to cover the plurality of cell vents (20) and be ruptured when gases are discharged from inside to outside of the plurality of battery cells (12) through the plurality of cell vents (20).

8. The battery module (10) as claimed in claim 7, wherein the busbar holder (40A, 40B) is molded and includes the holder base (41A, 41B) with the insulator (60) inserted therein.

9. The battery module (10) as claimed in claim 7 or 8, wherein each cell vent covering portion (63) includes at least one slot (65, 66, 67) passing through the insulator (60) in a thickness direction.

10. The battery module (10) as claimed in claim 9, wherein the at least one slot (65, 66, 67) includes a plurality of slots (65, 66, 67), and wherein
the plurality of slots (65, 66, 67) extend along a plurality of cutting lines intersecting each other.

11. The battery module (10) as claimed in any of claims 7 to 10, wherein the plurality of battery cells (12) and the plurality of busbars (27) are arranged in a second direction intersecting the first direction,
the plurality of cell vent covering portions (63) are arranged in the second direction to be spaced apart from the plurality of busbars (27), and
the holder base (41A, 41B) includes a blocking wall (47) extending in the second direction between the plurality of cell vent covering portions (63) and the plurality of busbars (27) and protruding away from the plurality of battery cells (12).

12. The battery module (10) as claimed in any of claims 7 to 11, wherein the insulator (60) further includes an insulating plate portion (61) connected to the cell vent covering portion (63), and a blocking wall insertion portion (70) that is bent and extends from the insulating plate portion (61) away from the plurality of battery cells (12), optionally to be inserted into the blocking wall (47).

13. The battery module (10) as claimed in any of claims 7 to 12, wherein a side surface (17) of the insulating plate portion (61) is exposed to face the plurality of battery cells (12).

14. The battery module (10) as claimed in any of claims 7 to 13, wherein the plurality of battery cells (12) are arranged in a second direction intersecting the first direction, and
the busbar holder (40A, 40B) further includes a plurality of separation partition walls (50), each of the plurality of separation partition walls protruding to be interposed between a pair of adjacent battery cells (12) among the plurality of battery cells (12).

15. The battery module (10) as claimed in any of claims 7 to 14, further including an adhesive layer (80, 82) disposed between the busbar holder (40A, 40B) and the plurality of battery cells (12), such that the busbar holder (40A, 40B) is attached to the plurality of battery cells (12).
